# EUROPÄISCHE PATENTSCHRIFT

(11) **EP 2 859 311 B1**
(45) Veröffentlichungstag und Bekanntmachung des Hinweises auf die Patenterteilung: **03.05.2023**
(21) Anmeldenummer: 13723521.4
(22) Anmeldetag: 21.05.2013
(51) Int. Cl.: G01F 1/60

(54) **VERFAHREN ZUR STEUERUNG DER ERREGERENERGIE IN EINER SPULENANORDNUNG EINES DURCHFLUSSMESSGERÄTES, WELCHES ALS ZWEILEITER-FELDGERÄT AUSGEBILDET IST**
METHOD FOR CONTROLLING THE EXCITATION ENERGY IN A COIL ARRANGEMENT OF A FLOW METER WHICH IS FORMED AS A TWO-WIRE FIELD DEVICE
PROCÉDÉ DE COMMANDE D'ÉNERGIE D'EXCITATION DANS UN DISPOSITIF À BOBINES D'UN DÉBITMÈTRE, QUI EST RÉALISÉ SOUS LA FORME D'UN APPAREIL DE TERRAIN À DEUX CONDUCTEURS

(30) Priorität: 12.06.2012 DE 102012105042
(43) Veröffentlichungstag der Anmeldung: 15.04.2015
(73) Patentinhaber: Endress+Hauser Flowtec AG, 4153 Reinach (BL) (CH)
(72) Erfinder: SPAHLINGER, Andre, 79415 Bad Bellingen (DE); KÜNG, Thomas, CH-4052 Basel (CH); RÜFENACHT, Markus, CH-4106 Therwil (CH)
(74) Vertreter: Penner, Paul
(86) Internationale Anmeldenummer: PCT/EP2013/060424
(87) Internationale Veröffentlichungsnummer: WO 2013/186019

(56) Entgegenhaltungen:
- WO-A1-2009/154115
- US-A- 4 663 976
- US-A1- 2002 000 798
- US-B1- 6 729 191

## Beschreibung

Die Erfindung betrifft ein Verfahren zur Steuerung der Erregerenergie in einer Spulenanordnung eines Durchflussmessgerätes, welches als Zweileiter-Feldgerät ausgebildet ist, nach dem Oberbegriff des Anspruchs 1.

Magnetisch-induktive Durchflussmessgeräte nutzen für die volumetrische Strömungsmessung das Prinzip der elektrodynamischen Induktion aus: Senkrecht zu einem Magnetfeld bewegte Ladungsträger des Mediums induzieren im gleichfalls im Wesentlichen senkrecht zur Durchflussrichtung des Mediums und senkrecht zur Richtung des Magnetfeldes angeordneten Elektroden eine Spannung. Die induzierte Messspannung ist proportional zu der über den Querschnitt des Messrohres gemittelten Strömungsgeschwindigkeit des Mediums und somit zum Volumenstrom. Ist die Dichte des Mediums bekannt, lässt sich der Massestrom in der Rohrleitung bzw. dem Messrohr bestimmen. Die Messspannung wird üblicherweise über das Elektrodenpaar abgegriffen, das in dem Bereich des Messrohres angeordnet ist, in dem die maximale Magnetfeldstärke und folglich die maximale Messspannung zu erwarten ist. Die Elektroden sind üblicherweise galvanisch mit dem Medium gekoppelt; es sind jedoch auch magnetisch-induktive Durchflussmessgeräte mit berührungslos kapazitiv koppelnden Elektroden bekannt.

Das Messrohr kann entweder aus einem elektrisch leitfähigen Material, z. B. Edelstahl, gefertigt sein, oder aus einem elektrisch isolierenden Material bestehen. Ist das Messrohr aus einem elektrisch leitfähigen Material gefertigt, so muss es in dem mit dem Medium in Kontakt kommenden Bereich mit einem Liner aus einem elektrisch isolierenden Material ausgekleidet sein. Der Liner besteht je nach Temperatur und Medium beispielsweise aus einem thermoplastischen, einem duroplastischen oder einem elastomeren Kunststoff. Es sind jedoch auch magnetisch-induktive Durchflussmessgeräte mit einer keramischen Auskleidung bekannt.

Historisch bedingt sind solche Zweileiter-Feldgeräten überwiegend so ausgelegt, dass eine auf einen zwischen 4 mA und 20 mA liegenden Wert eingestellte momentane Stromstärke des in dem als Stromschleife ausgebildeten einzigen Paar Leitung momentan fliessenden Versorgungsstroms gleichzeitig auch den momentan vom Feldgerät erzeugten Messwert bzw. den momentan an das Feldgerät gesendeten Einstellwert repräsentiert. Infolgedessen besteht ein besonderes Problem von solchen Zweileiter-Feldgeräten insoweit darin, dass die von der Feldgerät-Elektronik zumindest nominell umsetzbare oder umzusetzende elektrisch Leistung - im folgenden kurz "verfügbare Leistung" - während des Betriebes in praktisch unvorhersehbarer Weise über einen weiten Bereich schwanken kann. Dem Rechnung tragend sind moderne Zweileiter-Feldgeräte (2L-Feldgeräte), insb. moderne Zweileiter-Messgeräte (2L-Messgeräte) mit (4 mA bis 20 mA)-Stromschleife, daher üblicherweise so ausgelegt, dass ihre mittels eines in der Auswerte- und Betriebsschaltung vorgesehenen Mikrocomputers realisierte Geräte-Funktionalität änderbar ist, und insofern die zumeist ohnehin wenig Leistung umsetzende Betriebs- und Auswerteschaltung an die momentan verfügbare Leistung angepasst werden kann.

Die WO 2009/154115 A1 beispielsweise lehrt ein Zweileiter-Messgerät, welches dazu ausgelegt ist ein Verfahren zur Steuerung der Erregerenergie in einer Spulenanordnung eines Durchflussmessgerätes auszuführen. Das Durchflussmessgerät weist dafür einen Kondensator zur Speicherung von Energie auf. Erreicht dieser einen vorgegebenen Schwellwert so wird ein Messzyklus kontrolliert ausgelöst. Genügt die Energie der Energieversorgung nicht für einen kontinuierlichen Betrieb der Spulenanordnung, so schaltet das System auf eine intermittierende Anregung um bis der Kondensator genug Spannung für eine Erregung der Spulenanordnung besitzt. Dieser Vorgang wird überwacht und bei Erreichen einer Schwellspannung wird der Kondensator entladen und die Energie zur Spulenanordnung geleitet. Anschließend erfolgt eine Ruhepause, in welcher der Kondensator wieder aufgeladen wird, so dass der Prozess von neuem ablaufen kann. Ist ausreichend Energie im Kondensator gespeichert, so wird die Ruhepause zwischen den Messzyklen reduziert. Das Verfahren deckt jedoch nicht den Fall ab, bei dem trotz Reduzierung der Ruhepausen überschüssige Energie im System vorhanden ist.

Von allen Komponenten eines magnetisch-induktiven Durchflussmessgerätes weist die Spulenanordnung zur Erzeugung des den Messstoff durchsetzenden Magnetfeldes B den grössten Energiebedarf auf.

Der Erfindung liegt daher die Aufgabe zugrunde, ein Verfahren bereitzustellen, welches die Leistung, welche einem Zweileiter-Feldgerät als Durchflussmessgerät zur Verfügung steht, möglichst effizient verwaltet.

Die Erfindung löst diese Aufgabe durch ein Verfahren mit den Merkmalen des Anspruchs 1.

Erfindungsgemäß weist ein Verfahren zur Steuerung der Erregerenergie in einer Spulenanordnung eines Durchflussmessgerätes mit einem Energiepuffersystem zur Speicherung von Energie, welches als Zweileiter-Feldgerät ausgebildet ist, zur Erzeugung eines ein Medium durchsetzenden Magnetfeldes B in Abhängigkeit von der Erregerenergie, wobei das Durchflussmessgerät mehrere Betriebszustände aufweist, zwischen denen es wechselt, welche einen in einem Zeitintervall getakteten Erregerstrom beschreiben, wobei zumindest ein erster Betriebszustand mit einer ersten Leistung betrieben wird, in welchem die Spulenanordnung in einem ersten Takt einen Erregerstrom mit einer ersten maximalen Stromstärke erregt, wobei der Takt zudem eine erste Pulspause aufweist, die folgenden Schritte auf:
A) Speicherung einer über eine Minimalleistung zum Betreiben des Gerätes hinausgehenden eingespeisten Überschussleistung zum Betreiben der Spulenanordnung während eines Taktes in Abhängigkeit von der zugeführten Leistung in einem Energiepuffersystem;
   wobei ein zumindest teilweises Aufladen des Energiepuffersystems in der ersten Pulspause erfolgt und ein zumindest teilweises Entladen des Energiepuffersystems während der Erregung der Stromstärke erfolgt, wobei das zumindest teilweise Entladen des Energiepuffersystems während der Erregung der Stromstärke erfolgt, so dass sich dieses kontinuierlich durch die Überschussleistung auflädt, sofern dem System mehr Leistung eingespeist wird als zur Ausführung des ersten Betriebzustandes notwendig ist; und
B) Wechsel in einen zweiten Betriebszustand, in welchem die Spulenanordnung in einem zweiten Takt mit einem Erregerstrom mit einer zweiten maximalen Stromstärke erregt wird, wobei der Takt eine zweite Pulspause aufweist, welche kürzer ist als die erste Pulspause, wobei die zweite maximale Stromstärke größer ist als die erste maximale Stromstärke.

Dabei ist die Spulenanordnung als eine Verbrauchergruppe zu betrachten, welche kontinuierlich mit einer Mindestleistung betrieben wird. Eine Spulenanordnung umfasst dabei vorzugsweise Spulen und eine Schaltung. Durch das erfindungsgemäße Verfahren kann Überschussenergie effektiv zur Verringerung des Pulspausenverhältnisses bis hin zu einem kontinuierlichen Betrieb oder in eine Erhöhung der Amplitude der erregten Stromstärke genutzt werden.

Vorteilhafte Ausgestaltungen der Erfindung sind Gegenstand der Unteransprüche

Es ist von Vorteil, wenn als Energiepuffersystem ein Kondensator verwendet wird, da dieses ein kostengünstiges Bauteil ist.

Es ist zudem von Vorteil, wenn die Steuerung der Erregerenergie unabhängig von der am Durchflussmesser anliegenden Klemmenspannung und/oder Klemmenstrom erfolgt. Da je nach Aufbau die Klemmenspannung und/oder der Klemmenstrom nur Zeitdiskret abgreifbar sind.

Ein besonders bevorzugter Betriebszustand liegt vor, wenn die Erzeugung eines kontinuierlich-getakteten Erregerstroms mit einer zweiten Pulspause von Null erfolgt.

Das Verfahren kann sowohl in magnetisch-induktiven Durchflussmessgeräten oder in Coriolis-Durchflussmessgeräten eingesetzt werden.

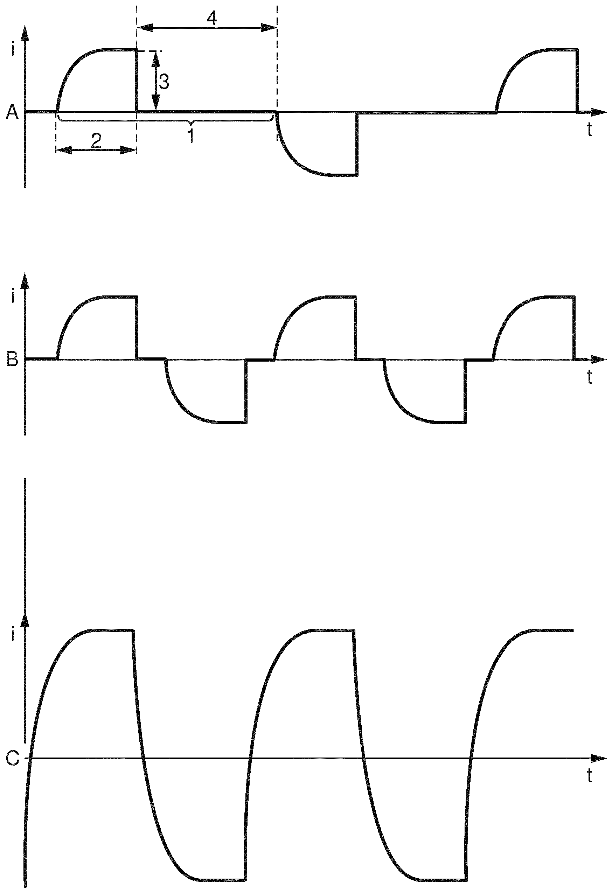

Im Folgenden wird das erfindungsgemäße Verfahren konkreter anhand eines magnetisch-induktiven Durchflussmessgerätes unter Bezugnahme auf Fig.1 näher erörtert.

Ein Durchflussmessgerät arbeitet, sofern keine Informationen hinsichtlich des Klemmenstromes und der Klemmenspannung, d.h. die an der Versorgung anliegende Stromstärke und Spannung bekannt sind, mit minimaler Leistung bis weitere Informationen zur Verfügung stehen. Demgegenüber ist die Spannung unabhängig vom Durchfluss - lediglich von äußeren Faktoren abhängig. Die sich daraus ergebende Leistung ist eine Kombination aus der durchflussproportionalen Stromstärke und der umgebungsbeeinflussten Spannung.

Fig. 1 zeigt mehrere Betriebszustände A, B und C. Bislang wurde bei einem magnetisch-induktiven Durchflussmessgerät mit einer Ausführung als Zweileiter-Feldgerät lediglich der erste Betriebszustand A ausgeführt. Dies kann damit begründet werden, dass die minimale Leistung, mit welcher das Zweileiter-Durchflussmessgerät kontinuierlich betrieben wird, gerade ausreicht um diesen Betriebszustand A auszuführen. Zwar ist bekannt, dass andere Geräte die Betriebszustände ebenfalls wechseln, allerdings nicht anhand des Ladezustandes des Energiespeichers bzw. des Energiepuffersystems.

Durch das Vorsehen eines Energiespeichersystems erfolgt erfindungsgemäß bei steigender Leistung eine Zwischenspeicherung im Energiepuffersystem, welches die Spulenanordnung mit einem getakteten Erregerstrom versorgt. Dabei weist ein erster Takt 1 eine Induktionsdauer 2 bis zum Erreichen einer maximalen Stromstärke 3 und eine sich daran anschließende Pulspause 4 auf, in welcher keine Erregung erfolgt.

Betrachtet man den Betriebszustand A, so entlädt sich das Energiepuffersystem, innerhalb der Induktionsdauer. In der ersten Pulspause 4 wird das Energiepuffersystem aufgeladen. Sofern dem System mehr Leistung zugeführt wird als zur Ausführung des ersten Betriebszustandes notwendig ist, erfolgt lediglich eine Teilentladung des Energiepuffersystems, so dass sich dieses kontinuierlich durch die Überschussleistung auflädt.

Vorzugsweise gleichzeitig mit der Energiespeicherung oder nach der Leistungsspeicherung kann das Durchflussmessgerät im laufenden Betrieb in den Betriebszustand B oder - besonders bevorzugt - in den Betriebszustand C, der kontinuierlich getakteten Erzeugung von Erregerstrom, wechseln. Im Betriebszustand C beträgt die Pulspause Null, allerdings kann sich die Amplitude des Erregerstroms, bzw. die maximale Stromstärke noch vergrößern.

Bei Anliegen einer höheren Leistung kann das Energiepuffersystem schneller aufgeladen werden. Dadurch können die Zeitintervalle zwischen denen kein Zuwachs der Stromstärke zu beobachten ist, verkürzt werden. Dies ist in Fig. 1 durch den Betriebszustand B dargestellt.

Bei Anliegen einer noch höheren Leistung kann das Durchflussmessgerät in den besonders bevorzugten Betriebszustand C übergehen, bei dem eine kontinuierliche Stromversorgung möglich ist. Dabei wird der Signal-Rausch Abstand vergrößert, sodass mehr Signal wahrgenommen wird, was insgesamt eine genauere Messwertbestimmung ermöglicht.

## Patentansprüche

1. Verfahren zur Steuerung der Erregerenergie in einer Spulenanordnung eines Durchflussmessgerätes mit einem Energiepuffersystem zur Speicherung von Energie, welches als Zweileiter-Feldgerät ausgebildet ist, zur Erzeugung eines ein Medium durchsetzenden Magnetfeldes B in Abhängigkeit von der Erregerenergie, wobei das Durchflussmessgerät mehrere Betriebszustände aufweist, zwischen denen es wechselt, welche einen in einem Zeitintervall (1) getakteten Erregerstrom beschreiben, wobei zumindest ein erster Betriebszustand mit einer ersten Leistung betrieben wird, in welchem die Spulenanordnung in einem ersten Takt (2) mit einem Erregerstrom mit einer ersten maximalen Stromstärke (3) erregt wird, wobei der Takt (2) zudem eine erste Pulspause (4) aufweist, mit den folgenden Schritten :
A) Speicherung einer über eine Minimalleistung zum Betreiben des Gerätes hinausgehenden eingespeisten Überschussleistung zum Betreiben der Spulenanordnung während eines Taktes in Abhängigkeit von der zugeführten Leistung in dem Energiepuffersystem;
**wobei** ein zumindest teilweises Aufladen des Energiepuffersystems in der ersten Pulspause erfolgt und ein zumindest teilweises Entladen des Energiepuffersystems während der Erregung der Stromstärke erfolgt, wobei das zumindest teilweise Entladen des Energiepuffersystems während der Erregung der Stromstärke erfolgt, so dass sich dieses kontinuierlich durch die Überschussleistung auflädt, sofern dem System mehr Leistung eingespeist wird als zur Ausführung des ersten Betriebzustandes notwendig ist; und
B) Wechsel in einen zweiten Betriebszustand, in welchem die Spulenanordnung in einem zweiten Takt mit einem Erregerstrom mit einer zweiten maximalen Stromstärke erregt wird,
**wobei** der Takt eine zweite Pulspause aufweist, welche kürzer ist als die erste Pulspause,
**wobei** die zweite maximale Stromstärke größer ist als die erste maximale Stromstärke.

2. Verfahren nach Anspruch 1, **dadurch gekennzeichnet, dass** das Durchflussmessgerät den Wechsel zwischen den ersten Betriebszustand und den zweiten Betriebszustand in Abhängigkeit vom Ladezustand des Energiepuffersystems durchführt.

3. Verfahren nach Anspruch 1 oder 2, **dadurch gekennzeichnet, dass** als Energiepuffersystem ein Kondensator verwendet wird.

4. Verfahren einem der vorhergehenden Ansprüche, **dadurch gekennzeichnet, dass** die Steuerung der Erregerenergie unabhängig von der am Durchflussmesser anliegenden Klemmenspannung und/oder Klemmenstrom erfolgt.

5. Verfahren nach einem der vorhergehenden Ansprüche, **dadurch gekennzeichnet, dass** der zweite Betriebszustand die Erzeugung eines kontinuierlich-getakteten Erregerstrom mit einer zweite Pulspause von Null ermöglicht.

6. Verfahren nach einem der vorhergehenden Ansprüche, **dadurch gekennzeichnet, dass** das Energiepuffersystem in das Gehäuse des Durchflussmessgerätes, vorzugsweise eines magnetisch-induktiven oder eines Coriolis-Durchflussmessgerätes, integriert ist.

7. Verfahren nach einem der vorhergehenden Ansprüche, **dadurch gekennzeichnet, dass** das Energiepuffersystem eine minimale Speicherkapazität von 20mJ, vorzugsweise für eine Stromstärke von 0-30 mA, aufweist.

## Claims

1. Procedure designed to control the excitation energy in a coil arrangement of a flowmeter with an energy buffer system designed to store energy, wherein said system is designed as a two-wire field device, said system being designed to generate a magnetic field B going through a medium depending on the excitation energy, wherein the flowmeter has multiple operating states it switches between, said states describing a cycle-controlled excitation current in a time interval (1), wherein at least a first operating state is operated with a first power, wherein in said state the coil arrangement is excited during a first cycle (2) with an excitation current with a first maximum current intensity (3), wherein the cycle (2) further has a first pulse pause (4), wherein said procedure comprises the following steps:
A) Storage of a surplus power that is fed in and exceeds a minimum power for the operation of the device, for the purpose of operating the coil arrangement during a cycle depending on the power supplied in the energy buffer system;
wherein the energy buffer system is at least partially charged during the first pulse pause and at least partially discharged during the excitation of the current intensity, wherein the at least partial discharging of the energy buffer system takes place during the excitation of the current intensity, such that said system is continuously charged by the surplus power if more power is supplied to the system than is needed to run the first operating state; and
B) Change to a second operating state in which the coil arrangement is excited during a second cycle with an excitation current with a second maximum current intensity,
wherein the cycle has a second pulse pause that is shorter than the first pulse pause,
wherein the second maximum current intensity is greater than the first maximum current intensity.

2. Procedure as claimed in Claim 1, **characterized in that** the flowmeter changes between the first operating state and the second operating state depending on the charge state of the energy buffer system.

3. Procedure as claimed in Claim 1 or 2, **characterized in that** a capacitor is used as the energy buffer system.

4. Procedure as claimed in one of the previous claims, **characterized in that** the control of the excitation energy is independent of the terminal voltage and/or the terminal current applied at the flowmeter.

5. Procedure as claimed in one of the previous claims, **characterized in that** the second operating state enables the generation of a continuously cycle-controlled excitation current with a second pulse pause of zero.

6. Procedure as claimed in one of the previous claims, **characterized in that** the energy buffer system is integrated into the housing of the flowmeter, preferably an electromagnetic flowmeter or a Coriolis flowmeter.

7. Procedure as claimed in one of the previous claims, **characterized in that** the energy buffer system has a minimum storage capacity of 20 mJ, preferably for a current intensity of 0-30 mA.

## Revendications

1. Procédé destiné à la commande de l'énergie d'excitation dans un agencement de bobines d'un débitmètre avec un système tampon d'énergie destiné à stocker de l'énergie, lequel système est conçu comme un appareil de terrain à deux fils, lequel système est destiné à générer un champ magnétique B traversant un produit en fonction de l'énergie d'excitation, le débitmètre présentant plusieurs états de fonctionnement entre lesquels il alterne, lesquels états décrivent un courant d'excitation cadencé dans un intervalle de temps (1), au moins un premier état de fonctionnement étant exploité avec une première puissance, état dans lequel l'agencement de bobines est excité au cours d'une première impulsion (2) avec un courant d'excitation ayant une première intensité de courant maximale (3), l'impulsion (2) présentant en outre une première pause entre impulsions (4), lequel procédé comprend les étapes suivantes :
A) Stockage d'une puissance injectée excédentaire dépassant une puissance minimale pour le fonctionnement de l'appareil, afin de faire fonctionner l'agencement de bobines pendant une impulsion en fonction de la puissance fournie dans le système tampon d'énergie ;
une charge au moins partielle du système tampon d'énergie étant effectuée pendant la première pause entre impulsions et une décharge au moins partielle du système tampon d'énergie étant effectuée pendant l'excitation de l'intensité de courant, la décharge au moins partielle du système tampon d'énergie étant effectuée pendant l'excitation de l'intensité de courant, de sorte que ledit système se charge en continu par la puissance excédentaire, dans la mesure où le système est alimenté avec une puissance supérieure à celle nécessaire pour exécuter le premier état de fonctionnement ; et
B) Passage à un deuxième état de fonctionnement dans lequel l'agencement de bobines est excité au cours d'une deuxième impulsion avec un courant d'excitation ayant une deuxième intensité de courant maximale,
l'impulsion présentant un deuxième intervalle entre impulsions qui est plus court que le premier intervalle entre impulsions,
la deuxième intensité de courant maximale étant supérieure à la première intensité de courant maximale.

2. Procédé selon la revendication 1, **caractérisé en ce que** le débitmètre effectue le changement entre le premier état de fonctionnement et le deuxième état de fonctionnement en fonction de l'état de charge du système tampon d'énergie.

3. Procédé selon la revendication 1 ou 2, **caractérisé en ce qu'**un condensateur est utilisé comme système tampon d'énergie.

4. Procédé selon l'une des revendications précédentes, **caractérisé en ce que** la commande de l'énergie d'excitation est indépendante de la tension et/ou du courant aux bornes appliqués au débitmètre.

5. Procédé selon l'une des revendications précédentes, **caractérisé en ce que** le deuxième état de fonctionnement permet de générer un courant d'excitation synchronisé en continu avec un deuxième intervalle entre impulsions égal à zéro.

6. Procédé selon l'une des revendications précédentes, **caractérisé en ce que** le système tampon d'énergie est intégré dans le boîtier du débitmètre, de préférence un débitmètre électromagnétique ou un débitmètre Coriolis.

7. Procédé selon l'une des revendications précédentes, **caractérisé en ce que** le système tampon d'énergie présente une capacité de stockage minimale de 20 mJ, de préférence pour une intensité de 0-30 mA.
